# EUROPEAN PATENT APPLICATION

(11) **EP 3 104 203 A1**
(43) Date of publication of application: **14.12.2016**
(21) Application number: 16161137.1
(22) Date of filing: 18.03.2016
(51) Int. Cl.: G02B 6/44

(54) **EASY ACCESSABLE OUTDOOR OPTICAL FIBER CABLE**

(30) Priority: 09.06.2015 IN 2209MU2015
(71) Applicant: Sterlite Technologies Ltd, Maharashtra 431 136 (IN)
(72) Inventor: KUMAR, Sravan, 500039 Telangana (IN); SAHOO, Kishore, Haveli (IN); SRIVASTAVA, Shivam, Madhya Pradesh (IN); TENZING, Kangbang Singh, Pin No. 795001 Manipur (IN); KUMAR, Roshan, 851213 Bihar (IN); LIU, Buddy, 210032 Nanjing (CN)
(74) Representative: Browne, Robin Forsythe

(57) **Abstract**

Disclosed is an optical fiber cable (100). The optical fiber cable (100) comprises a central strength member substantially along a longitudinal axis of the optical fiber cable (100). The optical fiber cable (100) comprises a plurality of sleeves (110a-f) stranded around the central strength member (105). Further, the optical fiber cable (100) comprises a first layer (125) that surrounds the plurality of sleeves (110a-f). Moreover, the optical fiber cable (100) comprises a second layer (130). The second layer (130) surrounds the first layer (125). In addition, the optical fiber cable (100) comprises a third layer (135). The third layer (135) surrounds the second layer (130). The plurality of sleeves (110a-f) is stranded around the central strength member (105) to form a stranded core. The one or more yarns are helically wound around the stranded core for binding each of the plurality of sleeves (110a-f) around the central strength member (105).

## Description

### TECHNICAL FIELD

The present application in based on, and claims priority from an Indian application number 2209/MUM/2015 filed on 9th June, 2015.The present disclosure relates generally to a field of fiber optics and more specifically, to an optical fibre cable for blowing application in micro-ducts.

### BACKGROUND

Optical fiber cables have secured an important position in building network of modem communication systems across the world. Conventionally, the optical fiber cables are installed by pulling the cables through the ducts. The ducts are usually made of polyethylene. Pulling the optical fiber cables requires a large amount of force to overcome the friction in the ducts which may damage the cables. Hence, an alternate technique of installation known as cable jetting is used for installation in which the optical fiber cable is blown through a duct, while simultaneously pushing the optical fiber cable into the duct. Micro-ducts are used for better utilization of the volume available in the standard ducts. The micro-ducts are small ducts which are designed to provide low-friction paths for placing the optical fiber cables. The micro-ducts have a diameter ranging from typically 3 to 18 millimeters and are bundled together in large or standard ducts.

A variety of conventional optical fiber cables exist in market that can be installed in micro-ducts. The conventional optical fiber cables include a central strength member with optical fibers stranded around it. These cables are specifically used to achieve higher fiber density. Moreover, the higher fiber density is fully attainable with an optical fiber cable that includes sleeves. The sleeves are loose buffered tubes and enclose one or more optical fibers. These sleeves are bunched together and housed in the optical fiber cable. In order to fit the optical fiber cable in a micro-duct, the optical fiber cable must have a small diameter.

In light of the above discussion, there is a need for an optical fiber cable that overcomes the above stated drawbacks.

### SUMMARY

The present disclosure seeks to provide an optical fiber cable.

The present disclosure also seeks to provide an optical fibre cable suitable for blowing in micro-ducts. In one aspect, an embodiment of the present disclosure provides an optical fibre cable. An optical fiber cable (100) comprising:
a central strength member (105) substantially along a longitudinal axis of the optical fiber cable (100);
a plurality of sleeves (110a-f)* stranded around the central strength member (105), each of the plurality of sleeves (110a-f) encloses a plurality of optical fibers (115), the plurality of sleeves (110a-f) is stranded around the central strength member (105) to form a stranded core;
a first layer (125) surrounding the plurality of sleeves (110a-f), the first layer (125) has one or more yarns, the one or more yarns are helically wound around the stranded core for binding each of the plurality of sleeves (110a-f) around the central strength member (105) and the one or more yarns prevent a tendency of opening up of the plurality of sleeves (110a-f) after a pre-defined number of turns due to reverse oscillations;
a second layer (130) surrounding the first layer (125), the second layer (130) is placed to prevent ingression of water inside the plurality of sleeves (110a-f); and
a third layer (135) surrounding the second layer (125),
characterized in that the second layer (130) prevents sticking of the first layer (125) and the third layer (135) at a pre-determined range of temperature in a range of 160°C-230 °C, the first layer (125) has a minimum thickness of 0.1 millimeter, the lay length of the first layer (125) is in a range of 20 millimeters-200 millimeters, the lay length of the first layer (125) is more than equal to one third of the lay length of the plurality of sleeves (110a-f), the first layer (125) acts as a binding element and a strength member for the plurality of sleeves (110a-f) and a lay length of the plurality of sleeves (110a-f) is in a range of 60 millimeters-600 millimeters.

Embodiments of the present disclosure substantially eliminate or at least partially address the aforementioned problems in the prior art, and provides an optical fiber cable which is robust and has smaller diameter. The sleeves require less amount of gel which reduces messiness and clean up time during the installation process. Therefore, the optical fiber cable requires less time for installation. The arrangement of the first layer, the water blocking tape and the third layer in the optical fiber cable prevents the sticking of the first layer and a third layer. The second layer of aramid yarns act as binding elements owing to a lower shrinkage value compared to the polyester-based yarns.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

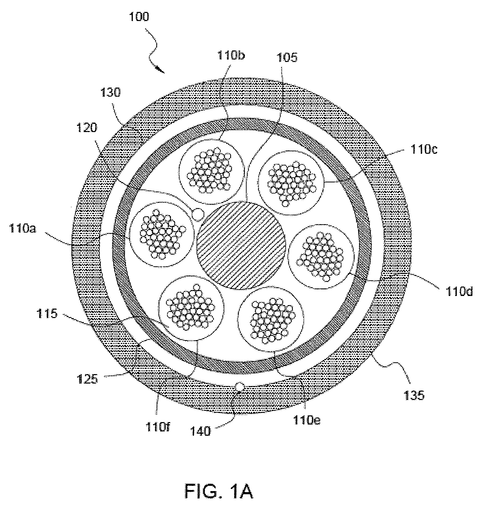

FIG. 1A illustrates a cross sectional view of an optical fiber cable, in accordance with various embodiments of the present disclosure;

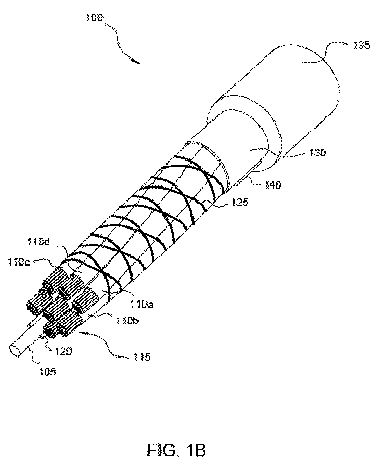

FIG. 1B illustrates a perspective view of the optical fiber cable of FIG. 1A, in accordance with various embodiments of the present disclosure; and

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides an optical fiber cable. The optical fiber cable includes a central strength member substantially along a longitudinal axis of the optical fiber cable. Further, the optical fiber cable includes a plurality of sleeves stranded around the central strength member. Furthermore, the optical fiber cable includes a first layer that surrounds the plurality of sleeves. Moreover, the optical fiber cable includes a second layer. The second layer surrounds the first layer. In addition, the optical fiber cable includes a third layer. The third layer surrounds the second layer. Further, each of the plurality of sleeves encloses a plurality of optical fibers. The plurality of sleeves is stranded around the central strength member to form a stranded core. The lay length of the plurality of sleeves is in a range of 60 millimeters-600 millimeters. Moreover, the first layer has one or more yarns. The one or more yarns are helically wound around the stranded core for binding each of the plurality of sleeves around the central strength member. Further, the one or more yarns prevent a tendency of opening up of the plurality of sleeves after a pre-defined number of turns due to reverse oscillations. Moreover, the second layer is placed to prevent ingression of water inside the plurality of sleeves. In addition, the second layer prevents sticking of the first layer and the third layer at a pre-determined range of temperature in a range of 160 °C-230 °C. In addition, the first layer has a minimum thickness of 0.1 millimeter and the lay length of the first layer is in a range of 20 millimeters-200 millimeters. The lay length of the first layer is more than equal to one third of the lay length of the plurality of sleeve. Furthermore, the first layer acts as a binding element and a strength member for the plurality of sleeves.

According to an embodiment, the optical fiber cable has a small diameter to facilitate deployment in micro-ducts and closed narrow locations. Further, the optical fiber cable may have any dimension based on dimensions of individual layers in the structure of the optical fiber cable. In an embodiment of the present disclosure, the diameter of the stranded core is about 4.1 millimeter and the optical fiber cable has the diameter of about 5.1 millimeters. In another embodiment of the present disclosure, the diameter of the stranded core is about 5.5 millimeters. The stranded core includes 9 sleeves stranded around the central strength member. In yet another embodiment of the present disclosure, the diameter of the stranded core is about 7.6 millimeters and the optical fiber cable has the diameter of about 9.9 millimeters. In addition, the stranded core includes 15 plurality of sleeves stranded around the central strength member. In addition, the optical fiber cable has the diameter of 5.1 millimeter.

According to an embodiment, the central strength member provides support to the plurality of sleeves. In an embodiment of the present disclosure, the central strength members is made of a fiber reinforced plastic (hereinafter "FRP"). In another embodiment of the present disclosure, the central strength member is made of steel. In yet another embodiment of the present disclosure, the central strength member is made of any suitable material. Examples of the suitable material include but may not be limited to copper, aramid yarn and fiber glass. Further, the central strength member is characterized by a diameter measured along the cross section. In an embodiment of the present disclosure, the diameter of the central strength member is about 1.40 millimeters. In another embodiment of the present disclosure, the diameter of the central strength member is about 2.80 millimeters. Moreover, the central strength member may be coated. The central strength member is coated when diameter of the optical fiber cable is greater than 3 millimeters. Moreover, the central strength member is coated to provide a cushion effect to the plurality of sleeves for consistent mechanical performance during installation and service. In addition, a coating made of Ethyl acrylic acid is placed around the central strength member. The central strength member is prevents buckling of the optical fiber cable. The central strength member provides robustness and tensile strength to the optical fiber cable. Moreover, the central strength member acts as anti-buckling element and prevents the third layer from the shrinkage during the negative temperature conditions.

According to an embodiment, each of the plurality of sleeves is a tube for encapsulating the plurality of optical fibers. The plurality of sleeves provides support and protection to each of the plurality of optical fibers against crush, bend and stretch. In addition, the plurality of sleeves provides protects the plurality of optical fibers and prevents ingression of water inside. In an embodiment of the present disclosure, the plurality of sleeves is made of thermoplastic co-polyester elastomer (hereinafter "TPE"). In another embodiment of the present disclosure, the plurality of sleeves is made of low smoke zero halogen (hereinafter "LSZH") material. In yet another embodiment of the present disclosure, the plurality of sleeves is made of any other suitable material. The plurality of sleeves provides mechanical isolation, physical damage protection and identification of each of the plurality of fibers. In addition, each of the plurality of sleeves may be a loose tube. In addition, each of the plurality of sleeves may be tear off by bare hands/fingers. The tear off of the plurality of sleeves by bare fingers facilitates easy access of each of the plurality of optical fibers. Further, each sleeve of the plurality of sleeves has an inner diameter and an outer diameter. In an embodiment of the present disclosure, each sleeve of the plurality of sleeves has the outer diameter of about 1.3 millimeters and the inner diameter of about 1.05 millimeters. In an embodiment of the present disclosure, the plurality of sleeves is helically stranded around the central strength member. The helical stranding is turning of each of the plurality of sleeves around the central strength member periodically in a pre-defined direction. The pre-defined direction is at least one of a clockwise direction and an anticlockwise direction. In another embodiment of the present disclosure, the plurality of sleeves is S-Z stranded around the central strength member. The binding is performed to retain lay length of the stranded plurality of sleeves and uniform stress distribution along length of the optical fiber cable. Furthermore, the stranding of the plurality of sleeves is performed in order to provide the lay length. In general, the lay length is a longitudinal distance along length of the central strength member required for one sleeve to go all the way around the central strength member. The lay length of the plurality of sleeves is in a range of 60 millimeters-600 millimeters. Moreover, the S-Z fashion of stranding is a form of stranding of the plurality of sleeves. The plurality of sleeves are wound around the central strength member in sections with a first direction of winding in S-shape alternating with sections with a second direction of winding in Z-shape. The first direction is the clockwise direction and the second direction is the anticlockwise direction. In addition, the S-Z stranding allows uniform distribution of the stress across all the plurality of sleeves. The S-Z stranding may have any number of turns between the S-shape and the Z-shape. In an embodiment of the present disclosure, the number of turns is in a range of 3-5. In another embodiment of the present disclosure, the number of turns may be more or less than 5. Moreover, the SZ stranding of the plurality of sleeves facilitates mid-span operation for easy access of the plurality of optical fibers. The S-Z stranded plurality of sleeves opens up after a certain number of turns due to reverse oscillations. In addition, the optical fiber cable may have more or less number of sleeves.

According to an embodiment, each sleeve of the plurality of sleeves encloses the plurality of optical fibers. Each of the plurality of optical fibers is a standard ITU-T G.652D silica optical fiber. In an embodiment of the present disclosure, each sleeve of the plurality of sleaves includes 12 optical fibers. In another embodiment of the present disclosure, each sleeve of the plurality of sleeves includes more or less than 12 optical fibers. Further, the optical fiber cable includes 12 fibers per sleeve. In addition, the plurality of optical fibers in each sleeve may vary depending on the cable requirements. In an example, each sleeve of the plurality of sleeves carries 12 optical fibers. Moreover, the optical fiber cable includes 6 sleeves, thereby making a total of 72 optical fibers in the optical fiber cable. In another example, each sleeve of the plurality of sleeves carries 12 optical fibers. Moreover, the optical fiber cable includes 24 sleeves, thereby making a total of 288 optical fibers in the optical fiber cable. The increase in the length of the plurality of sleeves results in micro and macro bends inside each of the plurality of optical fibers. The micro and the macro bend inside each of the plurality of optical fibers results in higher attenuation in the optical fiber cable.

According to an embodiment, the plurality of yarn threads facilitates absorption of water and moisture. Each of the plurality of yarn threads prevents ingression of the water inside the optical fiber cable. The plurality of yarn threads is made of a super absorbent polymer (hereafter "SAP") coated polyester threads. In general, SAP is a polymer that absorbs and retains extremely large amounts of any liquid relative to their own mass. Examples of SAP materials include but may not be limited to polyacrylamide copolymer, ethylene maleic anhydride copolymer, cross-linked carboxymethylcellulose, polyvinyl alcohol copolymers, cross-linked polyethylene oxide and starch grafted copolymer of polyacrylonitrile. In an embodiment of the present disclosure, the optical fiber cable may have any number of yarn threads. In another embodiment of the present disclosure, the optical fiber cable has 3 yarn threads. In yet another embodiment of the present disclosure, the optical fiber cable has more or less than 3 yarn threads.

According to an embodiment, the first layer is used as the binding element to bind the stranded plurality of sleeves to prevent the opening up of the S-Z stranded plurality of sleeves. Moreover, the first layer helically surrounds the stranded core of the plurality of sleeves. Moreover, the first layer provides retention in the lay length of the optical fiber cable. The first layer is made of a high strengthening aramid yarn. The first layer is a binding element for the stranded plurality of sleeves. The first layer has one or more yarns. In an embodiment of the present disclosure, number of yarn is 1. In another embodiment of the present disclosure, number of yarn is more or less than 1. Further, the first layer has a thickness and the lay length. The pre-defined thickness of the first layer has a minimum value of 0.1 millimeter. The lay length of the first layer is in a range of 20 millimeters-200 millimeters. In addition, the lay length of the first layer is more than equal to one third of the lay length of the plurality of sleeves.

According to an embodiment, the second layer prevents ingression of the water inside the optical fiber cable. In an embodiment of the present disclosure, the second layer is a water blocking tape. In another embodiment of the present disclosure, the second layer is a yarn layer. Accordingly, the second layer prevents exposure of the plurality of sleeves and the plurality of optical fibers to hydroxyl ions. In addition, the second layer has a coating of the SAP material. Further, the second layer is characterized by width and thickness. In an embodiment of the present disclosure, the width of the second layer is about 18 millimeters. In another embodiment of the present disclosure, the width of the second layer is about 30 millimeters. In an embodiment of the present disclosure, the thickness of the second layer is about 0.3 millimeters. In another embodiment of the present disclosure, the thickness of the second layer is more or less than 0.3 millimeter. In addition, the second layer prevents sticking of the first layer and the third layer at a pre-determined range of temperature. The pre-determined range of temperature is 160 °C to 230 °C.

According to an embodiment, the third layer interacts directly with ambient environment. In addition, the third layer is a sheathing layer. The third layer protects the optical fiber cable against the crush, the bend and tensile stress along the length of the optical fiber cable. In addition, the third layer with shrinkage during negative temperature conditions results in an increase in length of the plurality of sleeves present inside the optical fiber cable. In general, after the suitable material for the third layer is extruded over the stranded core of the optical fiber cable. The suitable material passes through a water trough to quench relatively hot third layer. When the suitable material cools during the quenching process, the shrinkage of the third layer may occur. The shrinkage of the third layer may result in an undulated stranded core with undesirable compressive axial stress and/or strains. In an embodiment of the present disclosure, the third layer is made of a high density poly-ethylene material (hereinafter "HDPE"). In another embodiment of the present disclosure, the third layer is made of a medium density poly-ethylene material (hereinafter "MDPE"). In yet another embodiment of the present disclosure, the third layer is made of any suitable material. In an embodiment, the third layer has a thickness of about 0.5 millimeters. In another embodiment of the present disclosure, the third layer has the thickness of about 1 millimeter. In yet another embodiment of the present disclosure, the third layer has thickness more or less than 1 millimeter.

According to an embodiment, a rip cord extends longitudinally between the third layer and the second layer. The extension of the rip cord longitudinally along the length of the optical fiber cable facilitates stripping of the third layer. In an embodiment of the present disclosure, the rip cord is made of a polyester material and the rip cord has circular cross-section. In another embodiment of the present disclosure, the rip cord is made of any suitable material. The plurality of rip cords is positioned along the length of the optical fiber cable. In an embodiment of the present disclosure, the optical fiber cable may have one or more rip cords. In another embodiment of the present disclosure, the optical fiber cable has no rip cord.

### DETAILED DESCRIPTION

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

Referring now to the drawings, particularly by their reference numbers, **FIG. 1A** illustrates a cross sectional view of an optical fiber cable **100,** in accordance with various embodiments of the present disclosure. The optical fiber cable **100** includes a central strength member **105,** a plurality of sleeves **l1Oa-f,** a plurality of optical fibers **115,** a plurality of yarn threads **120** and a first layer **125** (as seen in **FIG. 1A** in conjunction with the perspective view of the optical fiber cable **100** provided in **FIG.** 1B). Further, the optical fiber cable **100** includes a second layer **130,** a third layer **135** and a rip cord **140.** The central strength member **105** is substantially present along a longitudinal axis of the optical fiber cable **100.** The central strength member **105** is of circular cross-section. The cross section of the central strength member **105** runs along the longitudinal axis of the optical fiber cable **100.** The central strength member **105** is surrounded by the plurality of sleeves **110a-f.** The plurality of sleeves **110a-f** covers the plurality of optical fibers **115.** The plurality of sleeves **110a-f** is stranded around the central strength member **105** to form a stranded core. The plurality of yarn threads **120** is dispersed between each of the plurality of sleeves **110a-f.** Further, the first layer **125** surrounds the stranded plurality of sleeves **110a-f.** The first layer **125** act as a binding element and a strength member for the stranded plurality of sleeves **110a-f.** The first layer **125** binds the plurality of sleeves **110a-f** around the central strength member **105** Furthermore, the first layer **125** is surrounded by the second layer **130.** Moreover, the third layer **135** surrounds the second layer **130** and is placed underneath the third layer **135.** Further, the first rip cord **140** is positioned at an interface of the second layer **130** and the third layer **135.**

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. An optical fiber cable (100) comprising:
a central strength member (105) substantially along a longitudinal axis of the optical fiber cable (100);
a plurality of sleeves (110a-f) stranded around the central strength member (105), each of the plurality of sleeves (110a-f) encloses a plurality of optical fibers (115) and the plurality of sleeves (110a-f) is stranded around the central strength member (105) to form a stranded core;
a first layer (125) surrounding the plurality of sleeves (110a-f), the first layer (125) has one or more yarns, the one or more yarns are helically wound around the stranded core for binding each of the plurality of sleeves (110a-f) around the central strength member (105) and the one or more yarns prevent a tendency of opening up of the plurality of sleeves (110a-f) after a pre-defined number of turns due to reverse oscillations;
a second layer (130) surrounding the first layer (125), the second layer (130) is placed to prevent ingression of water inside the plurality of sleeves (110a-f); and
a third layer (135) surrounding the second layer (125),
**characterized in that** the second layer (130) prevents sticking of the first layer (125) and the third layer (135) at a pre-determined range of temperature in a range of 160°C-230 °C, the first layer (125) has a minimum thickness of 0.1 millimeter, the lay length of the first layer (125) is in a range of 20 millimeters-200 millimeters, the lay length of the first layer (125) is more than equal to one third of the lay length of the plurality of sleeves (110a-f), the first layer (125) acts as a binding element and a strength member for the plurality of sleeves (110a-f) and a lay length of the plurality of sleeves (110a-f) is in a range of 60 millimeters-600 millimeters.

2. The optical fiber cable (100) according to claim 1, **characterized in that** the first layer (125) is made of an aramid yarn, the first layer (125) retains the lay length of the plurality of sleeves (110a-f) and the lay length of the plurality of sleeves (110a-f) is retained by countering the reverse oscillations in the stranded core.

3. The optical fiber cable (100) according to claim 1, **characterized in that** the plurality of sleeves (110a-f) is helically stranded around the central strength member (105), the plurality of sleeves (110a-f) is helically stranded by turning of each of the plurality of sleeves (110a-f) around the central strength member (105) periodically in a pre-defined direction. The pre-defined direction is at least one of a clockwise direction and an anticlockwise direction.

4. The optical fiber cable (100) according to claim 1, **characterized in that** the plurality of sleeves (110a-f) is S-Z stranded around the central strength member (105), each of the plurality of sleeves (110a-f) are wound around the central strength member (105) in sections with a first direction of winding in an S-shape alternating with the sections with a second direction of winding in a Z-shape and the first direction is a clockwise direction and the second direction is an anticlockwise direction.

5. The optical fiber cable (100) according to claim 1, **characterized in that** the central strength member (105) is coated with ethylene acrylic acid when diameter of the optical fiber cable is more than 3 millimeters.

6. The optical fiber cable (100) according to claim 1, **characterized in that** the optical fiber cable further comprises a plurality of yarn threads (120) dispersed between each of the plurality of sleeves (110a-f) and each of the plurality of yarn threads (120) is a super absorbent polymer coated polyester thread.

7. The optical fiber cable (100) according to claim 1, **characterized in that** the optical fiber cable (100) further comprises a plurality of rip cords (140) positioned at an interface of the second layer and the third layer and the plurality of rip cords (140) facilitate stripping of the third layer.

8. The optical fiber cable (100) according to claim 1, **characterized in that** diameter of the central strength member (105) is 1.40 millimeters, an outer diameter and an inner diameter of each of the plurality of sleeves (110a-f) is 1.35 millimeters and 1.05 millimeters, width of the second layer (130) is 18 millimeters, a thickness of the third layer (135) is 0.5 millimeter, a diameter of the stranded core is 4.1 millimeters and a diameter of the optical fiber cable (100) is 5.1 millimeters,

9. The optical fiber cable (100) according to claim 1, **characterized in that** the central strength member (105) is made of fiber reinforce plastic, each of the plurality of sleeves (110a-f) is made of thermoplastic co-polyester elastomer, the second layer (130) is a super absorbent polymer tape and the third layer (135) is made of a high density polyethylene material.

10. The optical fiber cable (100) according to claim 1, **characterized in that** diameter of the central strength member (105) is 2.80 millimeters, width of the second layer (130) is 30 millimeters, thickness of the third layer (135) is 1 millimeter, diameter of the stranded core is 5.5 millimeters and diameter of the optical fiber cable (100) is 9.9 millimeters,

11. The optical fiber cable (100) according to claim 1, **characterized in that** the central strength member (105) is made of steel, the second layer (130) is made of yarn and the third layer (135) is made of a medium density polyethylene material.

12. The optical fiber cable (100) according to claim 1, **characterized in that** the first layer (125) comprises three yarns.
